Europäisches Patentamt

European Patent Office

Office européen des brevets

(19)

(11) Numéro de publication : **0 175 626**
**B1**

(12)

# FASCICULE DE BREVET EUROPÉEN

(45) Date de publication du fascicule du brevet :
**17.08.88**

(21) Numéro de dépôt : **85430020.9**

(22) Date de dépôt : **24.07.85**

(51) Int. Cl.⁴ : **A 22 B   5/08**

(54) Chaîne d'abattage comportant un dispositif d'épilage.

(30) Priorité : **10.08.84 FR 8412760**
**17.10.84 FR 8416009**

(43) Date de publication de la demande :
**26.03.86 Bulletin 86/13**

(45) Mention de la délivrance du brevet :
**17.08.88 Bulletin 88/33**

(84) Etats contractants désignés :
**AT BE CH DE GB IT LI LU NL SE**

(56) Documents cités :
**DE-A- 1 507 934**
**FR-A- 1 230 589**

(73) Titulaire : **Aubert, Georges**
**Mas d'Armor La Roumiguière**
**F-13360 Roquevaire (FR)**

(72) Inventeur : **Aubert, Georges**
**Mas d'Armor La Roumiguière**
**F-13360 Roquevaire (FR)**

(74) Mandataire : **Roman, Alphonse**
**35 Rue Paradis**
**F-13001 Marseille (FR)**

Jouve, 18, rue St-Denis, 75001 Paris, France

## Description

L'invention concerne une chaîne d'abattage comportant un dispositif d'épilage pour chaîne d'abattage d'animaux de boucherie.

Il est destiné à la suppression des postes d'échaudage, d'ébouillantage et d'épilage dans les chaînes automatiques robotisées afin de les rendre plus économiques, plus hygiéniques et réduire les risques du personnel.

Dans la robotisation des chaînes d'abattage des porcins, on procède à la saignée, au lavage puis à l'échaudage pour permettre l'épilage et enfin au brûlage.

L'objet de l'invention concerne un dispositif supprimant les postes d'échaudage, permettant de passer directement à l'éviscération.

Cet objet est atteint par une chaîne d'abattage comportant un dispositif d'épilage avec les caractéristiques indiquées dans la revendication 1. Préféremment il est constitué par un poste d'épilage placé immédiatement après le poste d'abattage et avant le poste d'éviscération de la chaîne d'abattage et ce positionnement permet de réduire l'ensemble à trois postes à savoir, le poste de saignée, d'épilage et d'épilage avec carter fermé pour le brûlage au gaz et pouvant être non étanche pour le brûlage à l'alcool. Ce carter ouvrant à parois diélectriques et formant cloison thermique comporte des buses soit de pulvérisation d'alcool, soit de distribution de gaz combustible avec buses inférieures et supérieures de pulvérisation et un conduit d'aspiration des électrodes puissants d'électricité statique et des éléments d'ignition. Il est pourvu de deux secteurs l'un roulant sur rail récepteur de l'animal à traiter, ce rail traversant le carter étant isolé avec mise à la terre et coupe circuit.

Sur les dessins annexés donnés à titre d'exemple non limitatif d'une des formes de réalisation de l'objet de l'invention :

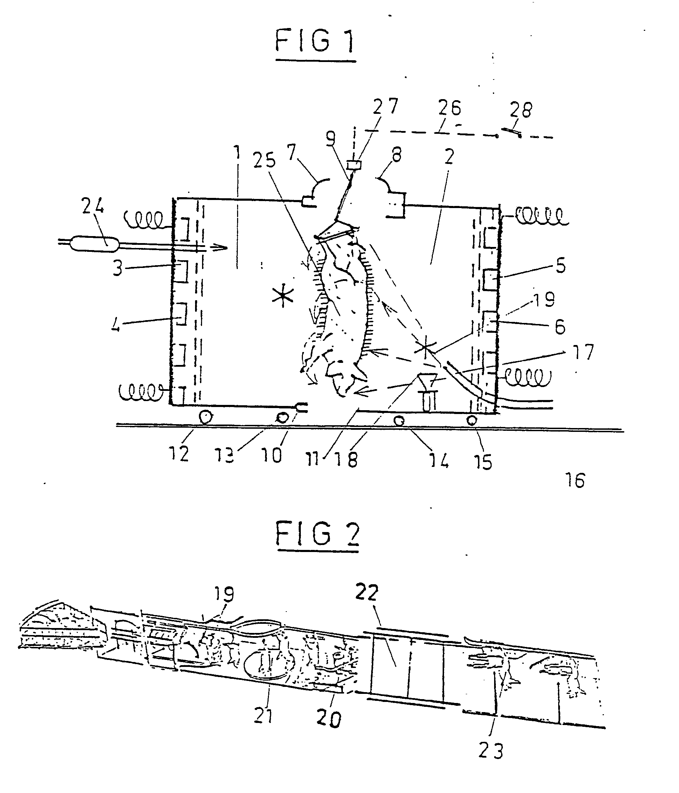

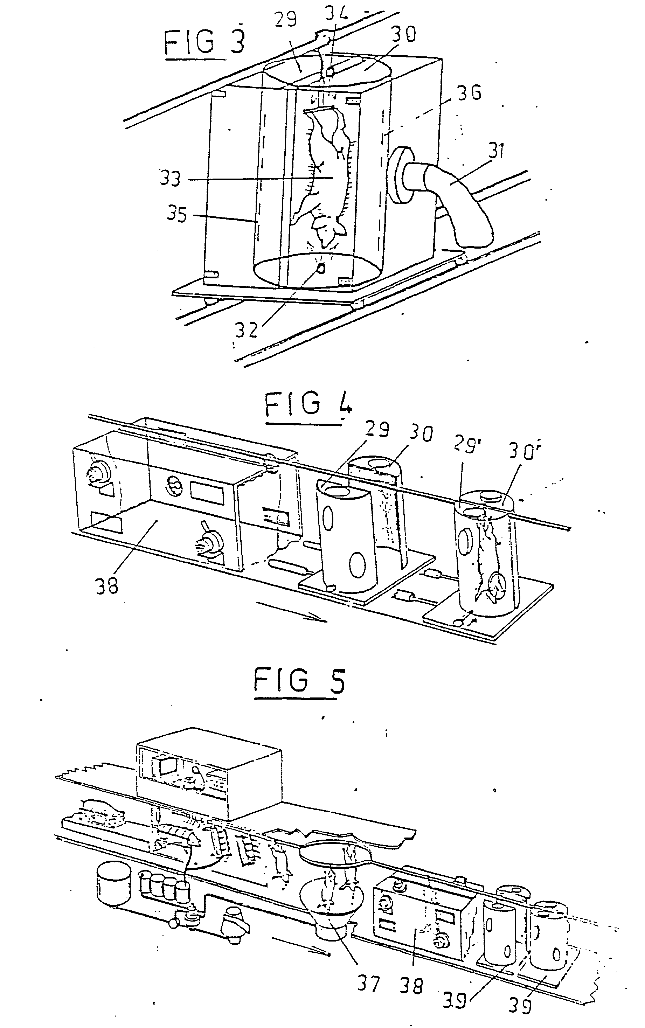

La figure 1 représente vue en élévation et en coupe le dispositif d'épilage avec effet électrostatique ; la figure 2 montre une application du dispositif sur une chaîne d'abattage ; la figure 3 montre le dispositif suivant la variante d'exécution pour le brûlage à l'alcool ; les figures 4 et 5 représentent l'ensemble des éléments constituant la station de brûlage à l'alcool avec carter ouvert.

Il est un phénomène connu, c'est celui de l'effet sur la chevelure des émetteurs d'électricité statique qui obligent le personnel à travailler avec des résilles retenant la chevelure qui se dresse et gêne les opérateurs dans leur travail.

C'est cet effet qui est appliqué à l'épilation des animaux de boucherie et plus particulièrement des porcins.

A cet effet le dispositif utilisé est constitué par un carter à deux éléments 1 et 2 mobiles et rapprochables. Ces deux capacités sont pourvues sur leurs parois aussi bien transversales que longitudinales d'émetteurs d'électricité statique 3, 4, 5, 6. Ces secteurs mobiles 1, 2 sont étanches pour brûlage au plasma ou au gaz avec éléments 7, 8 enrobant la chaîne 9 et les parties inférieures et périphériques 10, 11. Ils sont montés sur un roulement 12, 13, 14, 15 et son rail 16. Les carters sont en matière diélectrique et isolante avec parois formant cloison thermique.

Une adduction de gaz combustible 17 avec mise à feu 18 forme torche à plasma d'arc 19. Elle permet de faire passer une importante énergie électrique alors que le gaz peut être porté à 4 000° pendant quelques centièmes de secondes. Cet éclair consume intégralement les poils relevés jusqu'à la racine sans entamer l'épiderme. Ces émissions de gaz sont à volume et intervalle réglables.

Les générateurs d'électricité statique activés par le gaz conducteur ont leur action augmentée par le fait que le secteur de rail 27 traversant le poste 20 est isolé avec mise à la terre 26 comportant un coupe circuit 28.

La carcasse 25 est de ce fait, soit polarisée, soit isolée et la mise à la terre prévient toute cause d'accident.

Une adduction de gaz froid 24 peut être prévue afin d'éviter toute surchauffe.

On peut avec ce dispositif immédiatement après le poste de saignée passer au poste épilatoire 20 ou encore interposer éventuellement une station de lavage et séchage 21, 22 pour passer directement à l'éviscération 23.

Ce choc thermique très rapide et efficace, simplifie les chaînes automatiques d'abattage et d'éviscération d'animaux de boucherie, abaissant le prix de revient et permettant à la fois un travail rapide, hygiénique et économique tout en supprimant les risques d'accidents provoqués par l'ébouillantage.

Le dispositif suivant l'invention permet la destruction intégrale du poil redressé et son enlèvement sans laisser de trace sur la peau de l'animal.

Il peut également être constitué suivant les figures 3, 4, 5 avec les mêmes éléments par une pulvérisation à haute ou basse pression d'alcool fluide volatil sur la surface porteuse de poils et par l'ignition sans résidu simultané de cet alcool pulvérisé.

Le carter à éléments mobiles 29, 30 forme capacité ouvrante mais non étanche. Elle comporte les électrodes et un conduit d'aspiration.

Par contre, à la partie inférieure est disposée une ou plusieurs buses de projection 32 d'alcool pulvérisé.

Cette pulvérisation est préférentiellement à basse pression pour que la gouttelette pulvérisée soit portée sur la carcasse 33 sans projection ni éclatement et s'étale à la base du poil redressé pour l'imprégner sur toute sa surface.

Cette pulvérisation peut s'effectuer à la partie supérieure 34 ou latéralement ou sur toutes les faces.

On peut polariser la carcasse 33 afin que les zones non directement soumises à la projection soient enrobées.

Le poil fait mèche et s'imprègne, et sous l'effet de l'étincelle s'enflamme en brûlant sans résidu ni salissure de la peau qui elle-même est nettoyée par brossage ou raclage.

La projection peut être simultanée haut et bas 32, 34 et latérale.

Les rampes d'ignition 35, 36 sont disposées pour assurer une mise à fin rapide sur toute la hauteur de la carcasse. Elle peut être sous forte pression pour provoquer un brouillard par éclatement sur les parois.

Enfin, après le brûlage l'aspiration 31 entraîne tout gaz inflammable, explosif ou odeurs.

La carcasse subit un séchage au poste 37, 38 par ventilation avant traitement dans le carter 29, 30 qui s'ouvre (Fig. 3, 4) suivant la position ouverte 29, 30 (Fig. 4).

Pour le brûlage à l'alcool on doit opérer avec la position ouverte du carter 29, 30, alors que pour le brûlage au plasma on doit opérer avec le carter fermé 29', 30'.

Les électrodes portées à une haute tension positive ou négative par rapport à la carcasse qui est reliée à la masse par le rail créent un champ électrique où les forces électro-statiques retiennent, attirent et orientent les poils perpendiculairement aux parois.

Les buses également influencées par le champ magnétique pulvérisent une solution alcoolique, qui elle-même est soumise à une pression électrostatique supérieure à la pression capillaire donnant un brouillard capté par les poils.

L'air ambiant, isolant est modifié par le brouillard d'alcool et provoque une violente décharge électrique entre les électrodes et les poils détruisant sans résidus ces derniers par l'effet de la chaleur de la décharge électrique et de l'imprégnation osmotique dans sa texture du fait de la polarisation.

La chaîne d'abattage se réduit alors à trois postes ce sont le poste de saignée 37, de séchage 38 et de traitement 39 (Fig. 4).

Toutefois les formes, dimensions et dispositions des différents éléments pourront varier dans la limite des équivalents comme d'ailleurs les matières utilisées pour leur fabrication sans changer pour cela l'étendue de la protection conférée qui est déterminée par la teneur des revendications.

**Revendications**

1. Chaîne d'abattage comportant un dispositif d'épilage pour chaîne d'abattage d'animaux de boucherie caractérisée en ce que le dispositif d'épilage comporte un carter ouvrant (1, 2) à parois diélectriques et formant cloison thermique comportant des buses soit de pulvérisation d'alcool soit de distribution de gaz combustible (17, 32, 34), des électrodes puissants d'électricité statique (3, 4, 5, 6, 35, 36) et des éléments d'ignition (19).

2. Chaîne d'abattage suivant la revendication 1 caractérisée en ce que le carter ouvrant se compose de deux secteurs (1, 2) roulant sur un rail (27) au moyen des organes de roulement et comportant des éléments d'étanchéité pour le plasma périphériques supérieurs (7, 8) et inférieurs (10, 11) ainsi qu'une arrivée de gaz froid (24).

3. Chaîne d'abattage suivant la revendication 2 caractérisée en ce que le secteur de rail (27) traversant le carter est isolé et comporte une mise à la terre (26) avec coupe de circuit (28).

4. Chaîne d'abattage suivant les revendications 1 à 3, caractérisée en ce que le dispositif d'épilage se place immédiatement après un poste d'abattage et avant un poste d'éviscération (23) de la chaîne d'abattage.

5. Chaîne d'abattage suivant la revendication 1 caractérisée en ce que le carter (29, 30) du dispositif d'épilage comporte des buses de pulvérisation placées aux parties supérieures (34) et inférieures ainsi qu'en des points multiples latéraux et un conduit d'aspiration (31) ainsi servant comme poste de brûlage dans la position ouverte du carter.

6. Chaîne d'abattage suivant les revendications 1 à 3 caractérisée en ce qu'elle comporte trois postes, poste de saignée (37), poste de séchage (38) et d'épilage avec carter fermé pour le brûlage au gaz et carter pouvant être non étanche avec le conduit d'aspiration tel un carter ouvert pour le brûlage à l'alcool.

**Claims**

1. Slaughtering plant comprising a depilation device for a butchery animal slaughtering plant, characterized in that the depilation device has an opening case (1, 2) with dielectric walls forming a thermal dividing wall comprising nozzles either for spraying alcohol or for distributing a combustible gas (17, 32, 34), powerful static electricity electrodes (3, 4, 5, 6, 35, 36) and ignition elements (19).

2. Slaughtering plant according to claim 1, characterized in that the opening case is formed of two sectors (1, 2) rolling on a rail (27) by means of rolling members and including upper (7, 8) and lower (10, 11) peripheral sealing elements for the plasma as well as a cold gas intake (24).

3. Slaughtering plant according to claim 2, characterized in that the rail sector (27) passing through the casing is isolated and comprises an earth (26) with circuit breaker (28).

4. Slaughtering plant according to claims 1 to 3, characterized in that the depilation device is positioned immediately after a slaughtering station and before an evisceration station (23) of the slaughtering plant.

5. Slaughtering plant according to claim 1, characterized in that the casing (29, 30) of the depilation device comprises spraying nozzles placed at the upper (34) and lower parts as well as at multiple lateral points and a suction duct (31) thus serving as burning station in the open position of the casing.

6. Slaughtering plant according to claims 1 to 3, characterized in that it includes three stations, bleeding station (37), drying station (38) and depilation station with closed casing for gas burning and a casing which may be not sealed with the suction duct such as an open casing for alcohol burning.

**Patentansprüche**

1. Schlachtstraße mit Enthaarungsvorrichtung für Schlachtvieh, dadurch gekennzeichnet, daß die Enthaarungsvorrichtung aus einem sich öffnen lassenden Gehäuse (1, 2) mit dielektrischen Wänden besteht, die eine wärmeisolierende Trennwand darstellen und Düsen enthalten, durch die entweder Alkohol oder Brenngas (17, 32, 34) eingesprüht wird, sowie leistungsfähige Elektroden statischer Elektrizität (3, 4, 5, 6, 35, 36) und Zündelemente (19).

2. Schlachtstraße entsprechend Patentanspruch 1, dadurch gekennzeichnet, daß das sich öffnende Gehäuse aus zwei Sektoren (1, 2) besteht, die mittels einer Rollvorrichtung auf einer Schiene (27) rollen und Plasma-Abdichtungselemente oben (7, 8) und unten (10, 11) auf der Außenseite sowie eine Kaltgaszuleitung (24) besitzen.

3. Schlachstraße entsprechend Patentanspruch 2, dadurch gekennzeichnet, daß der das Gehäuse durchquerende Schienensektor (27) isoliert ist und mit einer Erdung (26) und Stromkreisunterbrechung (28) ausgestattet ist.

4. Schlachtstraße entsprechend Patentanspruch 1, dadurch gekennzeichnet, daß die Enthaarungsvorrichtung direkt hinter einer Schlachtstation und vor einer Ausweidestation der Schlachtstraße angebracht ist.

5. Schlachtstraße entsprechend Patentanspruch 1, dadurch gekennzeichnet, daß das Gehäuse (29, 30) der Enthaarungsvorrichtung mit Sprühdüsen oben (34) und unten sowie an zahlreichen seitlichen Stellen und mit einer Absaugleitung (31) ausgestattet ist und somit bei geöffneter Stellung des Gehäuses als Abbrennstation dient.

6. Schlachtstraße entsprechend einem der Patentansprüche 1 bis 3, dadurch gekennzeichnet, daß sie drei unterschiedliche Stationen besitzt, der Station Ausbluten (37), der Station Trocknen (38) und der Station Enthaaren bei geschlossenem Gehäuse, das nicht dichtschließend sein muß und eine Absaugvorrichtung besitzt wie ein offenes Gehäuse beim Abbrennen mit Alkohol.

FIG 1

FIG 2

FIG 3

29  34  30

36

33

35

31

32

FIG 4

29  30  29'  30'

38

FIG 5

37  38  39  39

2